# EUROPÄISCHE PATENTSCHRIFT

(11) **EP 3 279 838 B1**
(45) Veröffentlichungstag und Bekanntmachung des Hinweises auf die Patenterteilung: **30.10.2019**
(21) Anmeldenummer: 17183995.4
(22) Anmeldetag: 31.07.2017
(51) Int. Cl.: G06K 19/077, H01Q 1/22, H01Q 9/30, H01Q 5/40

(54) **RFID-SCHLÜSSEL-STECKANHÄNGER**
RFID KEY PLUG TRAILER
ATTAQUE ENFICHABLE DE CLÉ RFID

(30) Priorität: 03.08.2016 DE 202016104253 U
(43) Veröffentlichungstag der Anmeldung: 07.02.2018
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Maaß, Norman, 30455 Hannover (DE)
(74) Vertreter: Patentanwälte Thömen & Körner

(56) Entgegenhaltungen:
- EP-A2- 1 300 910
- WO-A2-2011/146492
- DE-U1-202013 008 511
- US-A1- 2015 145 680

## Beschreibung

Die Erfindung betrifft einen RFID-Schlüssei-Steckanhänger nach dem Oberbegriff des Anspruchs 1.

Elektronische Schlüsselverwaltungen bestehen aus einem RFID-Schlüssel-Steckanhänger, der mit dem Schlüssel unlösbar verbunden ist, und einem Schrank mit RFID-Leser für die Aufbewahrung und Verwaltung. Die eingesetzten RFID-Schlüssel-Steckanhänger und -Leser arbeiten meistens mit einer Betriebsfrequenz von 125 kHz. Damit ist eine sichere Identifizierung über sehr kurze Distanzen, nämlich einige Zentimeter möglich, da das verwendete H-Feld des Lesers homogen ist und auch durch den menschlichen Körper nicht abgeschirmt werden kann. Ein solcher RFID-Schlüssel-Steckanhänger ist aus der gattungsbildenden DE 10 2005 014 343 B4 bekannt.

Aus der DE 20 2013 008 511 U1 ist ein Schranksystem mit Schubladen bekannt, in denen zur Erfassung von darin befindlichen Gegenständen ein RFID-Transmitter und eine RFID-Antenne angeordnet sind.

Aus der US 2015/0145680 A1 ist ein System zum Schutz gegen Diebstahl bekannt, bei dem zwei RFID-Chips verwendet werden. Einer der RFID-Chips ist für größere Distanzen ausgelegt und arbeitet im Frequenzbereich zwischen 860 und 960 MHz und ein weiterer RFID-Chip ist für kleine Distanzen ausgelegt und arbeitet im Frequenzbereich von 13,56 MHz.

Aus der WO 2011/146492 A2 ist ein weiteres RFID-System bekannt, bei dem ein erster Transponder als Nahfeld-Transponder und ein zweiter Transponder als Fernfeld-Transponder ausgeführt sind.

Aus der EP 1 300 910 A2 ist eine Antenne mit kleinen Abmessungen bekannt, bei der durch besondere Ausgestaltung eines dielektrischen Materials des Kondensators und Kernmaterials einer Spule die effektive Höhe vergrößert wird.

Ein unerlaubtes Entfernen des RFID-Schlüssel-Steckanhängers aus einem Gebäude, zum Beispiel einem Industriebetrieb oder Krankenhaus, kann mit dieser Technologie aufgrund der ungenügenden Reichweite jedoch nicht erkannt und somit auch nicht verhindert werden. Hierfür bietet sich die UHF-Technologie an, mit der Transponder bis hin zu einigen Metern identifiziert werden können. Der hohen Reichweite der UHF-Technologie steht als Nachteil jedoch gegenüber, dass sich im emittierten E-Feld des Lesegerätes durch Interferenzen Stellen geringer Feldstärke im Feld ausbilden können und somit eine Erkennung von statisch gelagerten Transpondern nicht immer möglich wäre. Im Schrank ist die UHF-Technologie daher nicht zuverlässig einsetzbar. Zur Erfassung eines RFID-Schlüssel-Steckanhängers, der sich durch ein UHF-Feld bewegt, zum Beispiel im Eingangsbereich eines Gebäudes, ist die UHF-Technologie prädestiniert, aller dings ist die von bekannten LF-Transponder vorgegebene Länge und Gestalt des Steckergehäuses des Schlüssel-Steckanhängers nicht geeignet, einen UHF-Transponder unterzubringen, der einen gestreckten ungekürzten λ/4-Strahler oder gar λ/2-Strahler aufweist.

Der Erfindung liegt die Aufgabe zugrunde, einen RFID-Schlüssel-Steckanhänger zu schaffen, der sowohl innerhalb eines Schrankes zuverlässig identifizierbar ist, als auch eine ausreichende Lesereichweite zur Aufdeckung und Verhinderung von Missbrauch besitzt.

Diese Aufgabe wird bei einem RFID-Schlüssel-Steckanhänger nach dem Oberbegriff des Anspruchs 1 durch die Merkmale dieses Anspruchs gelöst.

Weiterbildungen und vorteilhafte Ausgestaltungen ergeben sich aus den Unteransprüchen.

Beim erfindungsgemäßen RFID-Schlüssel-Steckanhänger sind im selben Steckergehäuse sowohl ein LF-Transponder für den Langwellenbereich als auch ein UHF-Transponder für den UHF-Bereich angeordnet.

Im Langwellenbereich mit der englischen Abkürzung LF für Low Frequency, der von 30 kHz bis 500 kHz reicht, ist für RFID-Anwendungen eine Frequenz von 125 kHz zugelassen. Im UHF-Bereich, UHF als englische Abkürzung für Ultra High Frequency, der von 300 MHz bis 3 GHz reicht, sind für RFID-Transponder mehrere Frequenzbereiche zugelassen. Für erfindungsgemäße Anwendungen interessiert hier insbesondere der Bereich von 850 MHz bis 950 MHz.

Der LF-Transponder besteht aus einem ersten Chipmodul, an das eine Spule angeschlossen ist. Die Spule dient gleichzeitig als Antennenspule einer magnetischen Antenne. Zusammen mit der internen Kapazität des Chipmoduls wird so ein Schwingkreis gebildet. Der UHF-Transponder besteht aus einem zweiten Chipmodul und einer mit dem Chipmodul gekoppelten elektrischen Antenne. Aufgrund der Beibehaltung der für LF Transponder bekannten Bauform des RFID-Schlüssel-Steckanhängers hinsichtlich Länge und Durchmesser muss der UHF-Transponder jedoch mit einem mechanisch verkürzten λ/4-Strahler auskommen. Um trotzdem in Resonanz auf die Betriebsfrequenz zu kommen, wird der mechanisch verkürzte λ/4-Strahler durch Bauelemente des LF-Transponders elektrisch verlängert und die Impedanz durch eine diskrete Spule angepasst. Durch die Einbeziehung der bereits für den LF-Transponder vorhandenen Bauelemente wird der Aufwand für die elektrische Verlängerung des mechanisch verkürzten λ/4-Strahlers minimal. Der mechanisch verkürzte λ/4-Strahler ist zusammen mit den ihn elektrisch verlängernden Bauelementen im Schaft des Steckergehäuses angeordnet.

Gemäß einer Weiterbildung sind in einer ersten Ausgestaltung der mechanisch verkürzte λ/4-Strahler und die Antennenspule des LF-Transponders in Serie geschaltet, während sie in einer zweiten Ausgestaltung parallel geschaltet sind.

Bei der ersten Ausgestaltung wird der verkürzte λ/4-Strahler neben einer durch die Antennenspule und das Chipmodul mit der internen Kapazität gebildeten Dachkapazität zusätzlich um die axiale Länge der Antennenspule mechanisch verlängert, da die Zwischenräume zwischen den einzelnen Windungen der Antennenspule bei der wesentlich höheren Betriebsfrequenz im UHF-Bereich kapazitiv überbrückt sind.

Bei der zweiten Ausgestaltung wird durch die Bauteile des LF-Transponders der kapazitive Anteil des verkürzten λ/4-Strahlers erhöht.

Eine Weiterbildung der vorgenannten ersten Ausführung sieht vor, dass die Antennenspule des LF-Transponders am heißen Ende des verkürzten λ/4-Strahlers angeschlossen ist. Hier wirkt sich die durch die Bauteile des LF-Transponders gebildete Dachkapazität des λ/4-Strahlers besonders effektiv auf die elektrische Verlängerung und auf eine Breitbandigkeit aus.

Bei einer Weiterbildung der vorgenannten zweiten Ausführung ist die Antennenspule des LF-Transponders an einem Punkt des verkürzten λ/4-Strahlers angeschlossen, der zwischen 1/3 und 2/3, vorzugsweise1/2 seiner Länge liegt und die Antennenspule von diesem Punkt aus weiter parallel zum verkürzten λ/4-Strahler in Richtung dessen heißen Endes verläuft.

Durch diese Anordnung werden ein zusätzlicher Kapazitätsbelag des mechanisch verkürzten λ/4-Strahlers und eine Dachkapazität erzeugt, die an der gewählten Position der Verbindung mit der Antennenspule besonders wirksam ist und sowohl eine elektrische Verlängerung bewirkt als auch die Breitbandigkeit der Antenne erhöht.

Das weitere Chipmodul des UHF-Transponders ist vorzugsweise nahe des zur Verbindung mit Schlüsseln ausgestalteten Kopfes des Steckergehäuses angeordnet und der verkürzte λ/4-Strahler erstreckt sich von der diskreten Spule am Anschluss dieses Chipmoduls ausgehend bis zum freien Ende des Schaftes des Steckergehäuses.

Bei dieser Anordnung wird die zur Verfügung stehende Länge des Steckergehäuses zur Unterbringung des verkürzten λ/4-Strahlers optimal ausgenutzt, so dass sich die elektrische Verlängerung nur auf das nötige Minimalmaß beschränken kann, das zur Erlangung der Antennenresonanz erforderlich ist. Gleichzeitig liegt das heiße Ende des verkürzten λ/4-Strahlers entfernt von dem zur Verbindung mit Schlüsseln ausgestalteten Kopf, wodurch eine Verstimmung der Antennenresonanz durch die Anwesenheit und Ausrichtung von Schlüsseln vermindert wird.

Der verkürzte λ/4-Strahler kann nahe dem freien Ende des Schaftes des Steckergehäuses eine Dachkapazität in Form einer Vergrößerung der Leiteroberfläche aufweisen.

Diese allein durch Gestaltung des Leiters des mechanisch verkürzten λ/4-Strahlers gebildete kapazitive Komponente befindet sich an der Stelle, an der eine Vergrößerung des kapazitiven Anteils die größte Wirkung auf die elektrische Verlängerung des Strahlers hat. Sie ergänzt damit andere kapazitive Anteile, wie die bereits einbezogenen Bauelemente des LF-Transponders.

Gleichzeitig kann die Induktivität einer zwischen dem Anschluss des Chipmoduls des UHF-Transponders und dem kalten Ende des mechanisch verkürzten λ/4-Strahlers eventuell notwendigen diskreten Spule so gering wie möglich bemessen werden, damit sich nach der HF-Regel "Strom strahlt" vom kalten Ende des λ/4-Strahlers ausgehend ein Strombauch mit einem Strommaximum über einen möglichst langen Bereich des λ/4-Strahlers erstrecken kann. Dadurch wird der Wirkungsgrad der UHF-Antenne gegenüber dem Fall verbessert, bei dem das Strommaximum auf die diskrete Spule beschränkt werden muss.

Am anderen Anschluss des Chipmoduls kann nahe dem zur Verbindung mit Schlüsseln ausgestalteten Kopf oder innerhalb dieses Kopfes ein Gegengewicht angeordnet sein.

Dieses Gegengewicht führt zu einem mit einer Groundplane-Antenne vergleichbaren niedrigen Wert der Speiseimpedanz der UHF-Antenne und trägt so zusammen mit der diskreten Spule zu einer Optimierung der Anpassung an die Ausgangsimpedanz des Chipmoduls bei. Außerdem verringert das Gegengewicht die Anfälligkeit gegen Verstimmungen der Antennenresonanz bei Annäherung oder Entfernung leitfähiger Objekte an den UHF-Transponder. Das Gegengewicht kann durch eine große leitende Fläche erzeugt werden.

Es ist weiter möglich, das Gegengewicht mit am Kopf des Steckergehäuses befestigten Schlüsseln zu koppeln.

Dadurch wird die elektrisch wirksame Fläche des Gegengewichts vergrößert. Durch die Art der Kopplung als lose oder feste Kopplung kann darüber hinaus der durch die Schlüssel zugefügte Anteil am Gegengewicht beeinflusst werden.

Gemäß einer vorteilhaften Weiterbildung kann der mechanisch verkürzte λ/4-Strahler von einem Werkstoff umgeben sein, der eine hohe Permittivität (εr ≥ 5) und einen geringen Verlustwinkel (tan σ ≤ 0,05) aufweist.

Weiter kann der den mechanisch verkürzten λ/4-Strahler umgebende Werkstoff aus einem einen Hohlraum im Inneren des Schaftes des Steckergehäuses ausfüllenden Füllstoff und/oder der Wandung des Schaftes selbst bestehen.

Auch diese Maßnahme führt bereits für sich zu einer elektrischen Verlängerung des mechanisch verkürzten λ/4-Strahlers und kann die anderen vorgenannten Maßnahmen vorteilhaft ergänzen.

Nachfolgend wird die Erfindung anhand eines Ausführungsbeispiels erläutert, das in der Zeichnung dargestellt und nachfolgend beschrieben ist.
- Fig. 1: zeigt ein Schaltbild einer ersten Ausführung einer Kombination eines LF-Transponders mit einem UHF-Transponder
- Fig. 2: zeigt ein Schaltbild einer zweiten Ausführung einer Kombination eines LF-Transponders mit einem UHF-Transponder,
- Fig. 3: zeigt ein Platinenlayout für die Schaltung nach Fig. 1,
- Fig. 4: zeigt ein Platinenlayout für die Schaltung nach Fig. 2 und
- Fig. 5: zeigt als Längsschnitt eine Anordnung einer Platine in einem Steckergehäuse.

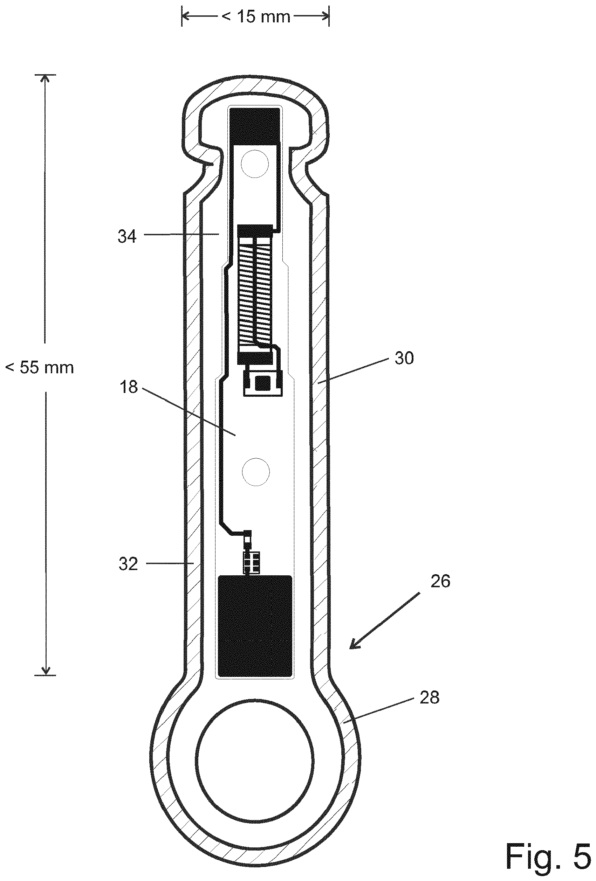

Der erfindungsgemäße RFID-Schlüssel-Steckanhänger umfasst ein Steckergehäuse 26 aus einem Kopf 28 und einem Schaft 30 und einen im Schaft 30 des Steckergehäuses 26 angeordneten einen LF-Transponder 14 und einen UHF-Transponder 16, wobei ein mechanisch verkürzter λ/4-Strahler 10 des UHF-Transponders 16 außer durch eine zur Impedanzanpassung dienende diskrete Spule L2 zusätzlich durch Bauelemente IC1 und L1 des LF-Transponders 14 elektrisch verlängert ist. Eine Gesamtansicht ist in Fig. 5 dargestellt und wird noch weiter unten beschrieben.

In den Ausführungsbeispielen sind zwei Varianten dargestellt. In beiden Varianten besteht der LF-Transponder 14 aus einem Chipmodul IC1, an dessen Anschlüssen eine Spule L1 angeschlossen ist. Die Spule L1 bildet zusammen mit einer internen Kapazität des Chipmoduls IC1 einen Parallelschwingkreis und ist gleichzeitig eine Antennenspule einer magnetischen Antenne. Der LF-Transponder 14 arbeitet auf einer Betriebsfrequenz von 125 kHz.

Der UHF-Transponder 16 besteht aus einem Chipmodul IC2, einer diskreten Spule L2 zur Impedanzanpassung, einem an die diskrete Spule L2 angeschlossenen mechanisch verkürzten λ/4-Strahler 10 und einem an den anderen Anschluss des Chipmoduls IC2 angeschlossenen Gegengewicht 12.

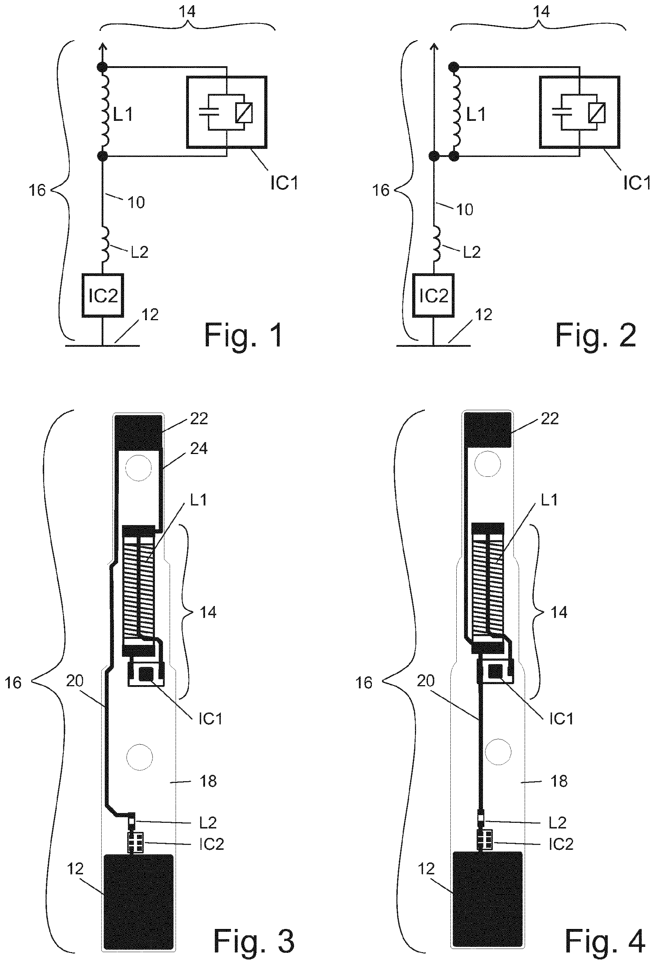

In Fig. 1 sind der mechanisch verkürzte λ/4-Strahler 10 und die Antennenspule L1 des LF-Transponders 14 in Serie geschaltet, wobei die Antennenspule L1 das heiße Ende des λ/4-Strahlers 10 darstellt. Unter dem heißen Ende eines Strahlers wird der Bereich verstanden, an dem ein Spannungsmaximum und Stromminimum der Antennenspannung bzw. des Antennenstroms aufgrund einer von einem Generator in einen Speisepunkt des Strahlers eingespeisten hochfrequenten Energie auftritt oder ein angelegtes elektromagnetisches Feld auf einen am Speisepunkt der Strahlers angeschlossenen Verbraucher ausübt.

In Fig. 2 sind der mechanisch verkürzte λ/4-Strahler 10 und die Antennenspule L1 des LF-Transponders 14 parallel geschaltet. Die Antennenspule L1 des LF-Transponders 14 ist an einem Punkt des verkürzten λ/4-Strahlers 10 angeschlossen, der auf 1/2 seiner Länge liegt und die Antennenspule L1 verläuft von diesem Punkt aus weiter parallel zum verkürzten λ/4-Strahler 10 in Richtung dessen heißen Endes.

Fig. 3 zeigt ein Platinenlayout für die Schaltung nach Fig. 1. Eine Platine 18 befindet sich in einem inneren Hohlraum eines im Wesentlichen rotationssymmetrischen Schaftes eines Steckergehäuses und folgt in ihrer Breite den Konturen dieses Hohlraums. Dabei verjüngt sich die Platinenbreite von einem Kopf des Steckergehäuses, der zur Aufnahme eines Schlüsselringes für die Verbindung mit Schlüsseln ausgestaltet ist, zu einem freien Ende hin, das in einen Steckschacht eines Schlüsselschrankes einsteckbar ist. Der Steckschacht ist von einer Lesespule umgeben.

Der LF-Transponder 14 ist auf der Platine 18 in einem Bereich angeordnet, der sich etwa von der Hälfte der Platinenlänge bis zum freien Ende erstreckt. Die Antennenspule L1 des LF-Transponders 14 ist axial in Längsrichtung der Platine 18 ausgerichtet und erstreckt sich etwa von der Hälfte der Platinenlänge zu einem Drittel der Platinenlänge vom freien Ende aus betrachtet.

Der UHF-Transponder 16 erstreckt sich über die gesamte Länge der Platine 18. Im Bereich des Kopfes des Steckergehäuses ist auf der Platine 18 eine leitende Fläche 12 angeordnet, an die sich zuerst das Chipmodul IC2 des UHF-Transponders 16, dann die diskrete Spule L2 und danach der verkürzte λ/4-Strahler anschließen. Dabei befindet sich das Chipmodul IC2 etwa auf ein Drittel der Länge der Platine 18 vom dem Kopf des Steckergehäuses zugewandten Ende entfernt. Eine den mechanisch verkürzten λ/4-Strahler 10 aus Fig. 1 bildende Leiterbahn 20 verläuft am Rand der Platine 18 seitlich mit Abstand zur Antennenspule L1 des LF-Transponders 14 zum freien Ende der Platine 18, an der sich eine weitere leitende Fläche 22 befindet. Auf der gegenüberliegenden Seite des vorerwähnten Verlaufs der Leiterbahn 20 verläuft eine weitere Leiterbahn 24 in umgekehrter Richtung zum nächstliegenden Anschluss der Antennenspule L1 des LF-Transponders 14 und kontaktiert die Antennenspule L1 dort. Die Antennenspule L1 setzt dann mechanisch und elektrisch als Reihenschaltung den λ/4-Strahler 10 fort.

Fig. 4 zeigt ein Platinenlayout für die Schaltung nach Fig. 2. Die Abmessungen der Platine 18 entsprechen denjenigen aus Fig. 3. Auch die Anordnung des LF-Transponders 14 mit dessen Chipmodul IC1 und dessen Antennenspule L1 entspricht derjenigen aus Fig. 3. Gleiches gilt auch für die Leiterflächen 12; 22 nahe dem Kopf des Steckergehäuses und nahe dem freien Ende sowie für das Chipmodul IC2 und die diskrete Spule L2 des UHF-Transponders 16. Die sich an diskrete Spule L2 des UHF-Transponders 16 anschließende Leiterbahn 20 des λ/4-Strahlers 10 aus Fig. 2 führt zu dem nächstliegenden Anschluss der Antennenspule L1 des LF-Transponders 14 und ist mit diesem kontaktiert. Von dort aus verläuft die Leiterbahn 20 in geringem Abstand und parallel zur Antennenspule L1 des LF-Transponders 14 weiter zur leitenden Fläche 22 am Ende der Platine 18, kontaktiert diese Fläche 22 und endet dort.

Die leitende Fläche 22 am zum freien Ende des Schaftes des Steckergehäuses weisenden Ende der Platine 18 wirkt bei der Ausführung nach Fig. 3 als zusätzlicher Kapazitätsbelag des Strahlers und bei der Ausführung nach Fig. 4 als Dachkapazität des Strahlers. Die Führung der Leiterbahn 20 von der diskreten Spule L2 zur leitenden Fläche 22 nahe dem freien Ende des Steckergehäuses bei der Ausführung nach Fig. 3 soll einen kapazitiven Kurzschluss zwischen der Leiterbahn 20 und der Antennenspule L1 reduzieren, damit weitgehend die vollständige mechanische Länge der Leiterbahnen 22, 24 und der seriell dazu geschalteten Antennenspule L1 als auch als elektrisch wirksame Länge des Strahlers zur Verfügung steht. Demgegenüber verläuft die Leiterbahn 20 zwischen dem Anschluss mit der Antennenspule L1 des LF-Transponders 14 und der leitenden Fläche 22 nahe dem freien Ende des Schaftes des Steckergehäuses bei der Ausführung nach Fig. 4 näher parallel zur Antennenspule L1 des LF-Transponders 14 als bei Fig. 3, um eine stärkere kapazitive Kopplung mit der Antennenspule L1 und damit einen höheren Kapazitätsbelag des Strahlers 10 zu erreichen.

Fig. 5 zeigt als Längsschnitt eine Anordnung einer Platine 18 in einem Steckergehäuse 26. Das Steckergehäuse 26 besteht aus einem Kopf 28 und einem Schaft 30. Der Kopf 28 ist gegenüber dem Schaft 30 verdickt und nimmt die Enden eines hier nicht dargestellten Schlüsselrings auf, der seinerseits die Öffnungen von Schlüsselgriffen von Schlüsseln durchdringt. Das Steckergehäuse bildet zusammen mit dem Schlüsselring und den daran befestigten Schlüsseln ein Schlüsselbund, bei dem das Steckergehäuse und die Schlüssel zerstörungsfrei untrennbarer miteinander verbunden sind. Das Steckergehäuse 26 ist Teil eines RFID-Schlüssel-Steckanhängers und beherbergt in einem inneren Hohlraum 34 die Platine 18 mit einem LF-Transponder und einem UHF-Transponder.

Das Schlüsselbund wird üblicherweise in einem Schlüsselschrank zusammen mit weiteren Schlüsseln oder Schlüsselbunden überwacht aufbewahrt, wobei der RFID-Schlüssel-Steckanhänger mit dem Schaft seines Steckergehäuses in einem Aufnahmeschacht steckt. Dort ist er mechanisch verriegelt und die im LF-Transponder gespeicherten Daten können mittels eines Lesegeräts, dessen Leserspule außen den Aufnahmeschacht umschließt, gelesen werden. Außerhalb des Aufnahmeschachtes kann eine missbräuchliche Entnahme mittels eines die Daten eines UHF-Transponders erfassenden Lesegeräts erkannt werden.

Damit RFID-Schlüssel-Steckanhänger als Bestandteil eines Schlüsselbunds handhabbar bleiben und auch die Abmessungen eines eine Vielzahl von RFID-Schlüssel-Steckanhängern beherbergenden Schlüsselschranks im üblichen Rahmen bleiben, müssen sich die Abmessungen der Steckergehäuse 26 an den Abmessungen üblicher Schlüssel orientieren. In der praktischen Ausführung haben daher die Außenabmessungen der Steckergehäuse 26 eine Länge von weniger als 6 cm, vorzugsweise weniger als 55 mm und die Schäfte 30 einen Durchmesser von weniger als 2 cm, vorzugsweise weniger als 15 mm. Die Köpfe 28 können etwas dicker als die Schäfte 30 sein, damit die RFID-Schlüssel-Steckanhänger beim Einstecken in die Steckschächte und Herausnehmen aus den Steckschächten gut handhabbar sind und sich außerdem zur Aufnahme von Schlüsselringen üblicher Größe eignen.

Da die Steckergehäuse 26 aus Stabilitätsgründen auch eine ausreichende Wandstärke ihrer Wandung 32 aufweisen müssen, verbleibt nur noch ein geringer Hohlraum 34 für die Anordnung der Platine 18. Die Bauelemente müssen daher auf einem sehr engen Raum untergebracht werden, aber die Längenausdehnung des Steckergehäuses 26 reicht nicht für die Unterbringung einer elektrischen Antenne des UHF-Transponders aus. Selbst für die Ausgestaltung als λ/4-Strahler bei einer Betriebsfrequenz von knapp 900 MHz würde eine Länge von 8,3 cm benötigt, während im Schaft 30 nur eine mechanische Länge von 5,5 cm abzüglich der Wandung 34 unterzubringen wäre. Daher wird die UHF-Antenne als verkürzter λ/4-Strahler ausgeführt und elektrisch verlängert.

### Bezugszeichenliste

- 10: mechanisch verkürzter λ/4-Strahler
- 12: leitende Fläche
- 14: LF-Transponder
- 16: UHF-Transponder
- 18: Platine
- 20: Leiterbahn
- 22: leitende Fläche
- 24: Leiterbahn
- IC1: LF-Chipmodul
- IC2: UHF-Chipmodul
- L1: Antennenspule
- L2: diskrete Spule
- 26: Steckergehäuse
- 28: Kopf
- 30: Schaft
- 32: Wandung
- 34: Hohlraum

## Patentansprüche

1. RFID-Schlüssel-Steckanhänger, umfassend ein Steckergehäuse (26) aus einem Kopf (28) und einem Schaft (30) und einen im Schaft (30) des Steckergehäuses (26) angeordneten LF-Transponder (14) für den Langwellenbereich, 30-500 kHz insbesondere 125 kHz, aus einem Chipmodul (IC1) und einer Antennenspule (L1), die eine magnetische Antenne ist, wobei der Schaft (30) des Steckergehäuses (26) in seinen Außenabmessungen eine Länge von weniger als 6 cm und einen Durchmesser von weniger als 2 cm aufweist, **dadurch gekennzeichnet, dass** dasselbe Steckergehäuse (26) zusätzlich einen UHF-Transponder (16) für den UHF-Bereich, 300 MHz bis 3 GHz, insbesondere 850-950 MHz, aus einem weiteren Chipmodul (IC2) und einer mit dem Chipmodul (IC2) gekoppelten elektrischen Antenne umfasst, wobei die elektrische Antenne aus einem im Schaft (30) des Steckergehäuses (26) angeordneten mechanisch verkürzten λ/4-Strahler (10) besteht und der mechanisch verkürzte λ/4-Strahler (10) zusätzlich durch ebenfalls im Schaft (30) des Steckergehäuses (26) angeordnete Bauelemente (L1, IC1) des LF-Transponders (14) elektrisch auf Resonanz mit der Betriebsfrequenz des UHF-Transponders (16) verlängert ist.

2. RFID-Schlüssel-Steckanhänger nach Anspruch 1, **dadurch gekennzeichnet, dass** der mechanisch verkürzte λ/4-Strahler (10) und die Antennenspule (L1) des LF-Transponders (14) in Serie geschaltet sind.

3. RFID-Schlüssel-Steckanhänger nach Anspruch 2, **dadurch gekennzeichnet, dass** die Antennenspule (L1) des LF-Transponders (14) am heißen Ende des verkürzten λ/4-Strahlers (10) angeschlossen ist und sowohl eine mechanische Verlängerung als auch eine Dachkapazität des λ/4-Strahlers (10) ist.

4. RFID-Schlüssel-Steckanhänger nach Anspruch 1, **dadurch gekennzeichnet, dass** der mechanisch verkürzte λ/4-Strahler (10) und die Antennenspule (L1) des LF-Transponders (14) parallel geschaltet sind.

5. RFID-Schlüssel-Steckanhänger nach Anspruch 4, **dadurch gekennzeichnet, dass** die Antennenspule (L1) des LF-Transponders (14) an einem Punkt des verkürzten λ/4-Strahlers (10) angeschlossen ist, der zwischen 1/3 und 2/3, vorzugsweise1/2 seiner Länge liegt und die Antennenspule (L1) von diesem Punkt aus weiter parallel zum verkürzten λ/4-Strahler (10) in Richtung dessen heißen Endes verläuft.

6. RFID-Schlüssel-Steckanhänger nach einem der Ansprüche 1 bis 5, **dadurch gekennzeichnet, dass** das weitere Chipmodul (IC2) des UHF-Transponders (16) nahe des zur Verbindung mit Schlüsseln ausgestalteten Kopfes (28) des Steckergehäuses (26) angeordnet ist und der verkürzte λ/4-Strahler (10) von einem Anschluss dieses Chipmoduls (IC2) oder einem Anschluss einer mit dem Chipmodul (IC2) verbundenen diskreten Spule (L2) ausgeht und bis zum freien Ende des Schaftes (30) des Steckergehäuses (26) erstreckt ist.

7. RFID-Schlüssel-Steckanhänger nach Anspruch 6, **dadurch gekennzeichnet, dass** der verkürzte λ/4-Strahler (10) nahe dem freien Ende des Schaftes (30) des Steckergehäuses (26) eine Dachkapazität in Form einer Vergrößerung der Leiteroberfläche (22) aufweist.

8. RFID-Schlüssel-Steckanhänger nach einem der Ansprüche 1 bis 7, **dadurch gekennzeichnet, dass** am anderen Anschluss des Chipmoduls (IC2) nahe dem zur Verbindung mit Schlüsseln ausgestalteten Kopf (28) oder innerhalb dieses Kopfes (28) ein Gegengewicht (12) angeordnet ist.

9. RFID-Schlüssel-Steckanhänger nach Anspruch 8, **dadurch gekennzeichnet, dass** das Gegengewicht (12) mit am Kopf (28) des Steckergehäuses (26) befestigten Schlüsseln gekoppelt ist.

10. RFID-Schlüssel-Steckanhänger nach einem der Ansprüche 1 bis 9, **dadurch gekennzeichnet, dass** der mechanisch verkürzte λ/4-Strahler (10) von einem Werkstoff umgeben ist, der eine hohe Permittivität εᵣ und einen geringen Verlustwinkel σ aufweist,
wobei εᵣ ≥ 5, und
wobei tan σ ≤ 0,05.

11. RFID-Schlüssel-Steckanhänger nach Anspruch 10, **dadurch gekennzeichnet, dass** der den mechanisch verkürzten λ/4-Strahler (10) umgebende Werkstoff aus einem einen Hohlraum (34) im Inneren des Schaftes (30) des Steckergehäuses (26) ausfüllenden Füllstoff und/oder der Wandung (32) des Schaftes (30) selbst besteht.

## Claims

1. RFID key plug-in pendant, comprising a plug housing (26), consisting of a head (28) and a shaft (30), and an LF transponder (14), arranged in the shaft (30) of the plug housing (26), for the long-wave range, 30-500 kHz, in particular 125 kHz, consisting of a chip module (IC1) and an antenna coil (L1), which is a magnetic antenna, wherein the shaft (30) of the plug housing (26), in its external dimensions, has a length of less than 6 cm and a diameter of less than 2 cm, **characterized in that** the same plug housing (26) additionally comprises a UHF transponder (16) for the UHF range, 300 MHz to 3 GHz, in particular 850-950 MHz, consisting of a further chip module (IC2) and an electrical antenna coupled to the chip module (IC2), wherein the electrical antenna consists of a mechanically shortened λ/4 antenna element (10) arranged in the shaft (30) of the plug housing (26), and the mechanically shortened λ/4 antenna element (10) is additionally electrically lengthened to resonance at the operating frequency of the UHF transponder (16) by components (L1, IC1) of the LF transponder (14) that are likewise arranged in the shaft (30) of the plug housing (26).

2. RFID key plug-in pendant according to Claim 1, **characterized in that** the mechanically shortened λ/4 antenna element (10) and the antennal coil (L1) of the LF transponder (14) are connected in series.

3. RFID key plug-in pendant according to Claim 2, **characterized in that** the antenna coil (L1) of the LF transponder (14) is connected to the hot end of the shortened λ/4 antenna element (10) and is both a mechanical lengthening and a top capacitance of the λ/4 antenna element (10).

4. RFID key plug-in pendant according to Claim 1, **characterized in that** the mechanically shortened λ/4 antenna element (10) and the antenna coil (L1) of the LF transponder (14) are connected in parallel.

5. RFID key plug-in pendant according to Claim 4, **characterized in that** the antenna coil (L1) of the LF transponder (14) is connected to a point on the shortened λ/4 antenna element (10) that lies between 1/3 and 2/3, preferably 1/2, of its length, and the antenna coil (L1) runs from this point, in parallel with the shortened λ/4 antenna element (10), on towards the hot end of the latter.

6. RFID key plug-in pendant according to one of Claims 1 to 5, **characterized in that** the further chip module (IC2) of the UHF transponder (16) is arranged close to the head (28) of the plug housing (26), which head is configured for connection to keys, and the shortened λ/4 antenna element (10) starts from a connection of this chip module (IC2) or a connection of a discrete coil (L2) connected to the chip module (IC2) and extends as far as the free end of the shaft (30) of the plug housing (26).

7. RFID key plug-in pendant according to Claim 6, **characterized in that** the shortened λ/4 antenna element (10) has, close to the free end of the shaft (30) of the plug housing (26), a top capacitance in the form of an enlargement of the conductor surface (22).

8. RFID key plug-in pendant according to one of Claims 1 to 7, **characterized in that** a counterweight (12) is arranged at the other connection of the chip module (IC2) close to the head (28), which is configured for connection to keys, or inside this head (28).

9. RFID key plug-in pendant according to Claim 8, **characterized in that** the counterweight (12) is coupled to keys mounted on the head (28) of the plug housing (26).

10. RFID key plug-in pendant according to one of Claims 1 to 9, **characterized in that** the mechanically shortened λ/4 antenna element (10) is surrounded by a material that has a high permittivity εᵣ and a small loss angle o,
wherein εᵣ 5, and
wherein tan σ ≤ 0.05.

11. RFID key plug-in pendant according to Claim 10, **characterized in that** the material surrounding the mechanically shortened λ/4 antenna element (10) consists of a filling material filling a cavity (34) inside the shaft (30) of the plug housing (26) and/or consists of the wall (32) of the shaft (30) itself.

## Revendications

1. Attaque enfichable de clé RFID, comprenant un boîtier de fiche (26), constitué d'une tête (28) et d'une tige (30), et un transpondeur BF (14) agencé dans la tige (30) du boîtier de fiche (26) pour l'intervalle de longueur d'onde 30-500 kHz, en particulier 125 kHz, constitué d'un module de puce (IC1) et d'un bobinage d'antenne (L1), lequel est une antenne magnétique, dans laquelle la tige (30) du boîtier de fiche (26) possède dans ses dimensions extérieures une longueur inférieure à 6 cm et un diamètre inférieur à 2 cm, **caractérisée en ce que** le même boîtier de fiche (26) comprend en outre un transpondeur UHF (16) pour la plage UHF, 300 MHz à 3 GHz, en particulier 850-950 MHz, formé d'un module de puce (IC2) supplémentaire et d'une antenne électrique couplée au module de puce (IC2), dans laquelle l'antenne électrique est formée d'un émetteur λ/4 (quart d'onde) (10) raccourci mécaniquement agencé dans la tige (30) du boîtier de fiche (26) et l'émetteur λ/4 (10) raccourci mécaniquement est en outre allongé électriquement sur la résonance avec la fréquence de fonctionnement du transpondeur UHF (16) par le biais de composants (L1, IC1) du transpondeur BF (14) également agencés dans la tige (30) du boîtier de fiche (26).

2. Attaque enfichable de clé RFID selon la revendication 1, **caractérisée en ce que** l'émetteur λ/4 (10) raccourci mécaniquement et le bobinage d'antenne (L1) du transpondeur BF (14) sont commutés en série.

3. Attaque enfichable de clé RFID selon la revendication 2, **caractérisée en ce que** le bobinage d'antenne (L1) du transpondeur BF (14) est raccordé à l'extrémité chaude de l'émetteur λ/4 (10) raccourci et est aussi bien un allongement mécanique qu'une capacité de sommet de l'émetteur λ/4 (10).

4. Attaque enfichable de clé RFID selon la revendication 1, **caractérisée en ce que** l'émetteur λ/4 (10) raccourci mécaniquement et le bobinage d'antenne (L1) du transpondeur BF (14) sont commutés en parallèle.

5. Attaque enfichable de clé RFID selon la revendication 4, **caractérisée en ce que** le bobinage d'antenne (L1) du transpondeur BF (14) est raccordé à un point de l'émetteur λ/4 (10) raccourci se trouvant entre le tiers et les deux tiers de sa longueur, de préférence à la moitié de sa longueur, et le bobinage d'antenne (L1) s'étend depuis ce point en parallèle de l'émetteur λ/4 (10) raccourci dans la direction de l'extrémité chaude de celui-ci.

6. Attaque enfichable de clé RFID selon l'une des revendications 1 à 5, **caractérisée en ce que** le module de puce (IC2) supplémentaire du transpondeur UHF (16) est agencé près de la tête (28) du boîtier de fiche (26) configurée pour le raccordement à des clés et l'émetteur λ/4 (10) raccourci émane d'un branchement de ce module de puce (IC2) ou d'un branchement d'un bobinage discret (L2) raccordé au module de puce (IC2) et s'étend jusqu'à l'extrémité libre de la tige (30) du boîtier de fiche (26).

7. Attaque enfichable de clé RFID selon la revendication 6, **caractérisée en ce que** l'émetteur λ/4 (10) raccourci comporte près de l'extrémité libre de la tige (30) du boîtier de fiche (26) une capacité de sommet sous forme d'une extension de la surface conductrice (22).

8. Attaque enfichable de clé RFID selon l'une des revendications 1 à 7, **caractérisée en ce qu'**un contrepoids (12) est agencé à l'autre branchement du module de puce (IC2) près de la tête (28) configurée pour le raccordement à des clés ou à l'intérieur de cette tête (28).

9. Attaque enfichable de clé RFID selon la revendication 8, **caractérisée en ce que** le contrepoids (12) est couplé aux clés fixées sur la tête (28) du boîtier de fiche (26).

10. Attaque enfichable de clé RFID selon l'une des revendications 1 à 9, **caractérisée en ce que** l'émetteur λ/4 (10) raccourci mécaniquement est entouré d'un matériau possédant une permittivité *εᵣ* élevée et un angle de perte σ réduit, dans laquelle *εᵣ* ≥ 5, et dans laquelle tan *σ* ≤ 0,05.

11. Attaque enfichable de clé RFID selon la revendication 10, **caractérisée en ce que** le matériau entourant l'émetteur λ/4 (10) raccourci mécaniquement est constitué d'une matière de remplissage qui remplit un espace creux (34) à l'intérieur de la tige (30) du boîtier de fiche (26) et/ou est constitué de la paroi (32) même de la tige (30) .
